# EUROPEAN PATENT APPLICATION

(11) **EP 4 654 170 A1**
(43) Date of publication of application: **26.11.2025**
(21) Application number: 25171774.0
(22) Date of filing: 22.04.2025
(51) Int. Cl.: G08G 1/01, B60W 50/14

(54) **ADVISORY VEHICLE SPEED ASSISTANCE**

(30) Priority: 21.05.2024 US 202418670603
(71) Applicant: NXP B.V., 5656 AG Eindhoven (NL)
(72) Inventor: Schuerman, Cornelis Pieter, 5656 AG Eindhoven (NL); Fu, Yuting, 5656 AG Eindhoven (NL); Terechko, Andrei Sergeevich, 5656 AG Eindhoven (NL)
(74) Representative: Schmütz, Christian Klaus Johannes

(57) **Abstract**

One example discloses a system for advisory vehicle speed assistance, including: a controller coupled to receive a set of environmental information based on a location of an ego vehicle; wherein the environmental information includes a legal speed limit at the location; wherein the controller is configured to generate an advisory speed for the ego vehicle based on the set of environmental information; and wherein the advisory speed is different from the legal speed limit.

## Description

The present specification relates to systems, methods, apparatuses, devices, articles of manufacture and instructions for advisory vehicle speed assistance.

### SUMMARY

According to an example embodiment, a system for advisory vehicle speed assistance, comprising: a controller coupled to receive a set of environmental information based on a location of an ego vehicle; wherein the environmental information includes a legal speed limit at the location; wherein the controller is configured to generate an advisory speed for the ego vehicle based on the set of environmental information; and wherein the advisory speed is different from the legal speed limit.

In another example embodiment, further comprising a driver-assistance system coupled to the controller; wherein the driver-assistance system controls movement of a vehicle; and wherein the movement of the vehicle is based on the advisory speed.

In another example embodiment, the advisory speed controls the ego vehicle's actual physical speed.

In another example embodiment, the driver-assistance system is an advanced driver assistance system (ADAS).

In another example embodiment, further comprising a display coupled to the controller; wherein the advisory speed or advisory speed range is presented to a user of the ego vehicle on the display.

In another example embodiment, the environmental information includes a location, heading, and speed of other vehicles surrounding the ego vehicle; and the advisory speed is dependent upon the location, heading, and speed of the other vehicles surrounding the ego vehicle.

In another example embodiment, the environmental information includes a location, heading, and speed for each other vehicle immediately to a front, rear, right side, and left side of the ego vehicle.

In another example embodiment, the set of environmental information includes historical speeds at a location and roads ahead of the ego vehicle.

In another example embodiment, the ego vehicle is at the location on a current date; and the historical speeds are based upon a range of prior week, month or year dates centered about the current date.

In another example embodiment, the set of environmental information includes current speeds of other vehicles ahead of the ego vehicle.

In another example embodiment, the set of environmental information includes weather conditions, roadway construction, road hazards, road lighting, and road surface conditions at both a location of the ego vehicle and ahead of the ego vehicle.

In another example embodiment, the environmental information includes, a location and speed for vehicles surrounding the ego vehicle; historical speeds at a location and roads ahead of the ego vehicle; and current speeds of other vehicles ahead of the ego vehicle.

In another example embodiment, the controller is configured grant a highest priority to vehicles surrounding the ego vehicle when generating the advisory speed.

In another example embodiment, the controller is configured assign a pre-defined weight to the surrounding speeds, the historical speeds and the current speeds; and the controller is configured to generating the advisory speed based on a weighted average of the surrounding speeds, the historical speeds and the current speeds.

In another example embodiment, further comprising an arbiter; wherein the arbiter is configured to generate a commanded speed based on the legal speed limit and the advisory speed; and wherein the commanded speed controls the ego vehicle's actual physical speed.

In another example embodiment, the arbiter is configured to generate the commanded speed also based on an adaptive cruise control (ACC) requested speed and a user requested speed.

In another example embodiment, the arbiter is configured assign a pre-defined weight to the legal speed limit, the advisory speed, the ACC requested speed, and the user requested speed; and the arbiter is configured to set the commanded speed based on a weighted average of the legal speed limit, the advisory speed, the ACC requested speed, and the user requested speed.

In another example embodiment, the environmental information includes the legal speed limit at roads ahead of the ego vehicle.

According to an example embodiment, a method for advisory vehicle speed assistance, comprising: receiving a set of environmental information based on a location and route of an ego vehicle; wherein the environmental information includes a legal speed limit at the location and roads ahead; generating an advisory speed for the ego vehicle based on the set of environmental information; wherein the advisory speed is different from the legal speed limit.

The above discussion is not intended to represent every example embodiment or every implementation within the scope of the current or future Claim sets. The Figures and Detailed Description that follow also exemplify various example embodiments.

Various example embodiments may be more completely understood in consideration of the following Detailed Description in connection with the accompanying Drawings.

### BRIEF DESCRIPTION OF THE DRAWINGS

Figure 1 represents an example set of inputs for supporting driving automation systems.
Figure 2 represents an example of a driving automation system.
Figure 3 represents an example of an advisory speed assistance module added to a driving automation system.
Figures 4A, 4B represents example simulated operational applications of advisory vehicle speed assistance.
Figure 5 represents an example set of instructions for enabling advisory vehicle speed assistance.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

### DETAILED DESCRIPTION

Driving automation systems are various hardware and software tools for automating all or parts of the driving task enabling a vehicle to operate comfortably and safely. Driving automation systems include automated driving (AD), adaptive cruise control (ACC), intelligent speed assistance (ISA), collision assist, lane departure assist, traffic warnings, and other functionalities.

SAE J3016_202104 document presents a taxonomy and definitions for terms related to driving automation systems. It distinguishes six levels of driving automation, i.e.,
Level 0: No Driving Automation
Level 1: Driver Assistance
Level 2: Partial Driving Automation
Level 3: Conditional Driving Automation
Level 4: High Driving Automation
Level 5: Full Driving Automation

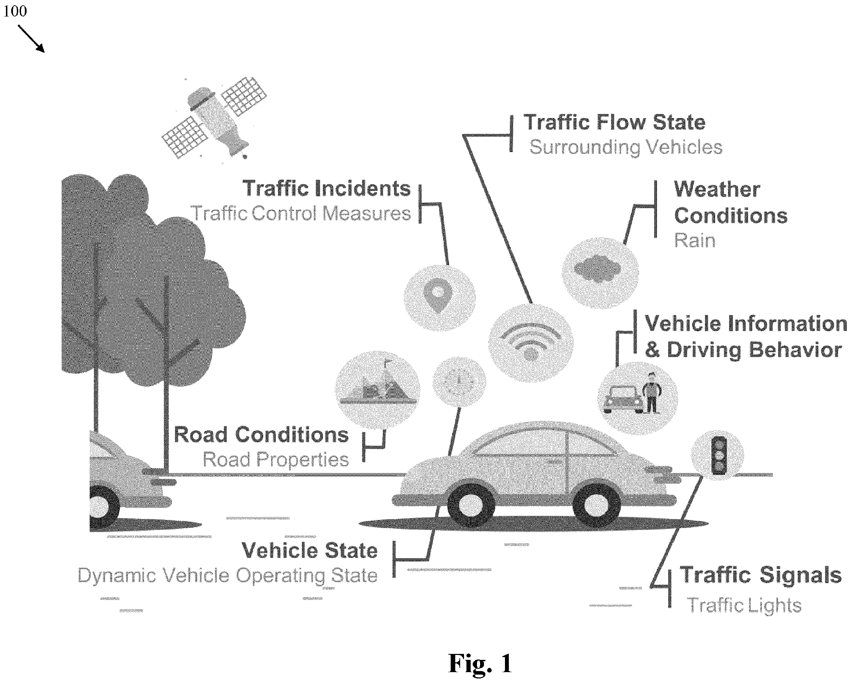

Figure 1 represents an example set of inputs 100 for supporting driving automation systems. The inputs 100 include traffic incidents, traffic flow, weather, road conditions, vehicle information, driving behavior, vehicle state, traffic signals, and etc.

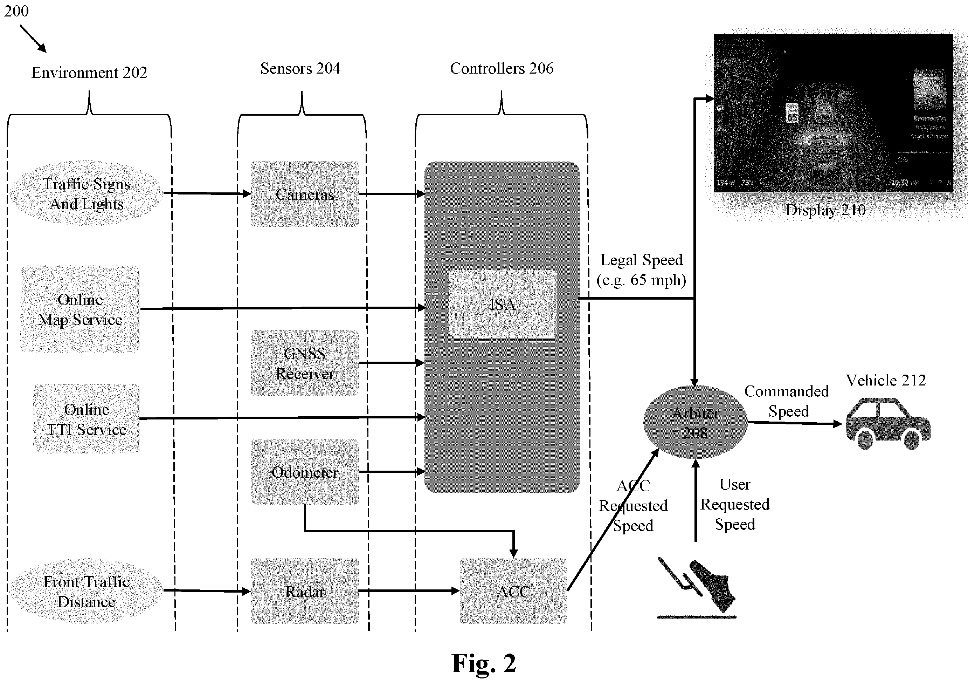

Figure 2 represents an example 200 of a driving automation system. The example driving automation system 200 includes: environmental information 202, sensors 204, controllers 206, an arbiter 208, a display 210, and an ego vehicle 212.

The environmental information 202 includes: traffic signs and lights, an online map service, an online traffic & travel information (TTI) service, and a front traffic distance from the ego vehicle 212 for collision avoidance.

The current traffic flow (i.e. average speeds of a large number of vehicles) and traffic incidents on the roads ahead of the ego vehicle 212 (i.e. the ego vehicle 212 road network horizon) is received from the online traffic & travel information (TTI) service (e.g. Google Traffic).

The sensors 204 include: cameras, a GNSS (Global Navigation Satellite System) receiver, a vehicle odometer, and radar.

The controllers 206 include: an intelligent speed assistance (ISA) module, and an adaptive cruise control (ACC) module.

The arbiter 208 receives a set of inputs, including: a legal speed limit (e.g. 65 mph) from the online map service and cameras viewing speed limit traffic signs. The arbiter 208 also receives an ACC requested speed, and a user requested speed (e.g. from a "accelerator pedal").

The arbiter 208 then applies a predetermined prioritization, weighting, and/or fusing algorithm based on the set of inputs, to generate a commanded speed sent to the ego vehicle's 212 speed controllers (not shown). These ego vehicle 212 speed controllers set an actual physical speed of the ego vehicle 212, equal to the commanded speed, as the ego vehicle 212 moves in a real ambient environment (e.g. on a physical tangible roadway).

The display 210 also receives the legal speed limit (e.g. 65 mph) information from the online map service and cameras viewing the traffic signs, and displays the legal speed limit (e.g. 65 mph) to the user driving the ego vehicle 212.

The commanded speed generated by the arbiter 208 setting the actual physical speed of the ego vehicle 212, however, does not guarantee a safe and comfortable ride for the user in the ego vehicle 212 and/or traffic near the ego vehicle 212.

Now discussed in an advisory speed assistance (ASA) module, that can be either stand alone, or added to a driving automation system. The ASA add-on can better ensure a safe and comfortable ride for the user in an ego vehicle and/or traffic near the ego vehicle. In various example embodiments, the ASA is added to a driving automation system, such as an Adaptive Cruise Control (ACC) system.

The advisory speed assistance (ASA) module in various applications can be added to SAE J3016_202104 Level 1 to Level 5 systems.

Note, "ego" is originally a psychological term referring to "self". In the driving automation system enhanced vehicle context, an "ego vehicle" refers to a vehicle having a suite of sensors and V2X (vehicle to everything) interfaces but must nevertheless operate primarily as the vehicle processes and interprets such information in a self-centered/self-referential way primarily from the vehicle's own perspective.

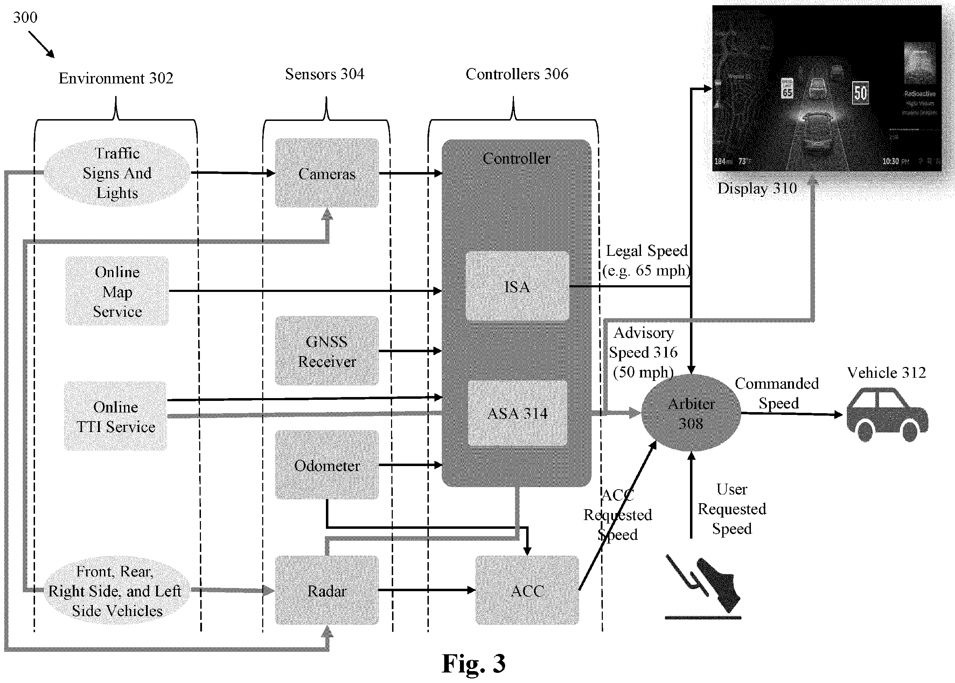

Figure 3 represents an example advisory vehicle speed assistance 300 which can be added to the automated driving system. The example automated driving system 300 includes: environmental information 302, sensors 304, controllers 306, an arbiter 308, a display 310, and an ego vehicle 312.

The environmental information 302 includes: traffic signs and lights, an online map service, and an online traffic & travel information (TTI) service.

The current traffic flow (i.e. average speeds of a large number of vehicles) and traffic incidents on the roads ahead of the ego vehicle 312 (i.e. the ego vehicle 312 road network horizon) is received from the online traffic & travel information (TTI) service (e.g. Google Traffic).

Historical average speeds on the roads ahead of the ego vehicle 312 (i.e. the ego vehicle 312 road network horizon) is received from the online map service.

The environmental information 302 also includes: not only a front traffic distance from the ego vehicle 312 for collision avoidance, but now additionally includes current actual speed and distance for each vehicle immediately to the front, rear, right side, and left side of the ego vehicle 312.

The sensors 304 include: cameras, a GNSS (Global Navigation Satellite System) receiver, a vehicle odometer, and radar.

The controllers 306 include: an intelligent speed assistance (ISA) module, and an adaptive cruise control (ACC) module.

The controllers 306 now additionally include: an advisory speed assistance (ASA) module 314 that generates an advisory speed 316. Operation of the ASA module 314 and generation of the advisory speed 316 will be extensively discussed below.

The arbiter 308 receives a set of inputs, including: a legal speed limit (e.g. 65 mph) from the online map service and cameras viewing speed limit traffic signs. The arbiter 308 also receives an ACC requested speed, and a user requested speed (e.g. from a "accelerator pedal"). The arbiter 308 additionally receives as input, the advisory speed 316.

The arbiter 308 then applies a predetermined prioritization, weighting, and/or fusing algorithm based on the set of inputs, to generate a commanded speed sent to the ego vehicle's 312 speed controllers (not shown).

These ego vehicle 312 speed controllers set an actual physical speed of the ego vehicle 312, equal to the commanded speed, as the ego vehicle 312 moves in a real ambient environment (e.g. on a physical tangible roadway).

The display 310 also receives both the legal speed limit (e.g. 65 mph) information from the online map service and cameras viewing the traffic signs, as well as the advisory speed 316 from the ASA module 314. The display 310 displays both the legal speed limit (e.g. 65 mph) and the advisory speed 316 (e.g. 50 mph) to the user driving the ego vehicle 312.

The ASA module 314 is configured to continuously compute the advisory speed 316, or advisory speed range, based on the set of environmental information 302 introduced above (including advisory speed traffic signs provided by the online map service and viewed by the cameras), that is used for informing a driver of the ego vehicle 312 and/or controlling the ego vehicle's 312 actual physical speed.

In some example embodiments, the advisory speed range is a predetermined speed window centered about the advisory speed 316. A size of the speed window can also be based on the environmental information 302, just like the advisory speed 316 is as discussed below.

The set of environmental information 302 input to the ASA module 314 and used to determine the advisory speed 316 includes the front, rear, right side, and left side of the ego vehicle 312 environmental information 302, enables the ASA module 314 to "see" all traffic immediately surrounding the ego vehicle 312 (e.g. an exact location, heading, and speed of other road users surrounding the ego vehicle 312).

This information can be acquired by the ego vehicle's 312 sensors 304 (e.g. radars, cameras, and V2X (e.g., V2V and V2I) communications from nearby road infrastructure and the surrounding traffic. Thus traffic flows on all-sides of the ego vehicle 312 are monitored.

Note, if the vehicles surrounding the ego vehicle 312 have their own ASA modules and are physically controlled by their own computed advisory speeds, a 'deadlock' condition (e.g. an undesirable feedback loop) may develop between these various vehicles (e.g. all the vehicles are commanded to simultaneously stop, go, etc. at a same time). If such a condition is considered undesirable, possible solutions include using the advisory speed range to control the ego vehicle 312 instead of just the advisory speed 316, so as to create a slight mis-match of commanded speeds. Alternately a randomized delay before fully commanding the ego vehicle 312 to the advisory speed 316 may reduce such lock-step behaviors. In other example embodiments, lock-step commanded speed adjustments can be avoided by adding a low pass filter to changes in the commanded speed, so as to minimize commanded speed jitter and/or hysteresis.

The set of environmental information 302 input to the ASA module 314 and used to determine the advisory speed 316 further includes the current average speeds for a large number of vehicles along the ego vehicle's 312 travel route (e.g. road network horizon).

In some example embodiments, the current date's traffic & travel information is updated every minute based on the ego vehicle's 312 current location and future destination.

This current traffic & travel information is typically acquired from the online TTI service (e.g. TomTom, Google, Apple, Satellite, etc.). The road network horizon includes upcoming parts of the route (e.g., several hundred meters) including roads connected to that route, as well as the traffic flow of a road stretch regards the speed of the traffic on that road stretch, if any.

The set of environmental information 302 input to the ASA module 314 and used to determine the advisory speed 316 additionally includes historical average speeds and traffic along the ego vehicle's 312 travel route. In some example embodiments, the historical information can be a range of prior year dates centered about the current date.

This historical information typically resides in digital maps and can be provided by an online map service. Historical traffic information of a road stretch regards the speed profile of that road stretch and concerns the average speed of the traffic at various times of day, days of week and periods of the year. It may also include a so called free-flow speed that may be different than the legal speed limit.

The set of environmental information 302 input to the ASA module 314 and used to determine the advisory speed 316 also includes additional environmental information such as current and forecast weather conditions, roadway construction and hazards, road lighting, vehicle condition, road surface condition, and the like, which are applicable to the ego vehicle's 312 travel route. This travel information can be acquired from an online TTI service and/or by the ego vehicle 312 sensors (e.g., rain sensors).

Finally, the set of environmental information 302 input to the ASA module 314 and used to determine the advisory speed 316 includes the legal speed limits and 'legal' advisory speeds along the ego vehicle's 312 travel route. The legal speed limit and advisory speeds may be obtained from camera sensors observing nearby traffic signs, or from the online map service. Traffic sign detection and classification can be augmented by radar or V2X information.

Various methods and algorithms can be applied by the ASA module 314 to prioritize, weight, fuse, etc. the environmental information 302 and the sensors 304 information, so as to compute the advisory speed 316.

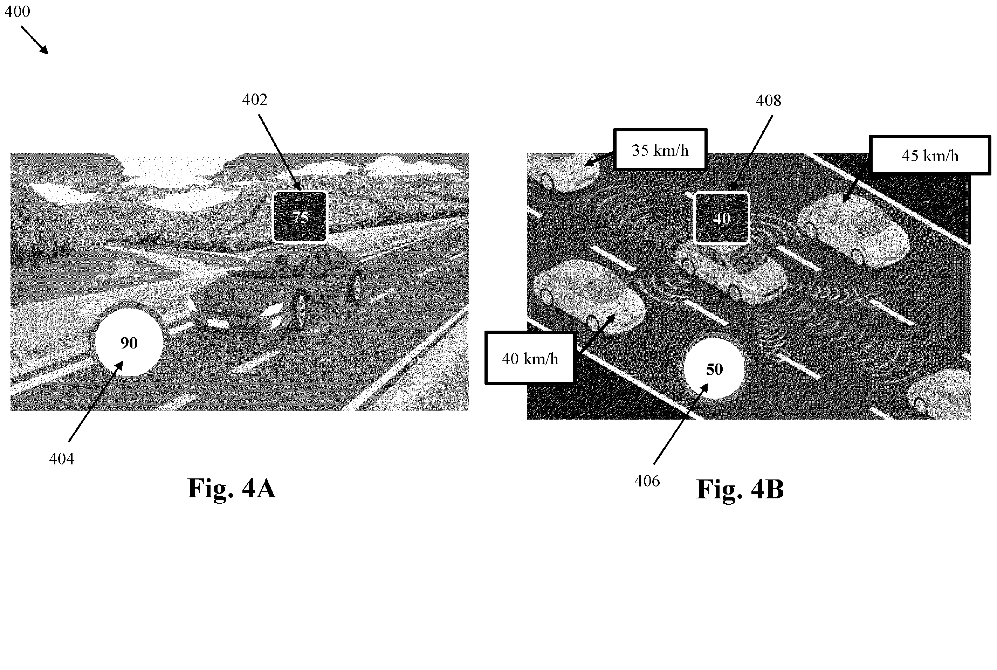

For example, the ASA module 314 may be programmed to grant a highest priority to nearby surrounding (i.e. front, rear, right side, and left side) traffic speeds when computing the advisory speed 316 (see Figure 4B for an example.).

The ASA module 314 may also be programmed to use a weighted average approach, which assigns a pre-defined weight to different sources of speed information. The weight can be dynamic as well. For example, on a winter day the (typical) historical traffic flow speed is very low due to ice or snow. But if this year the same week happened to be quite sunny and much warmer, then the historical speed is much less relevant than the current surrounding traffic speed; the ego vehicle 312 speed should have also a proper weight in order to calculate a speed that is both safe and comfortable for the passengers.

To minimize jitter or conflicts with other ASA enabled vehicles, the ASA module 314 may set the advisory speed 316 based on a standard deviation of the surrounding traffic's speeds, legal speed limit, and the historical traffic speeds. Neural networks and machine learning algorithms can also be applied to generate a more practical advisory speed 316 and even improve the performance over time. Multiple fusion methods and/or control theories can also be combined to achieve the best results.

As introduced earlier, in many example embodiments, the advisory speed 316 can be routed to the arbiter 308 to help set the commanded speed that affects the actual physical speed of the ego vehicle 312. Note, the arbiter 308 ultimately controls car's actual physical speed by setting the commanded speed, and only receives the advisory speed 316 as one of a set of inputs that also includes the legal speed (e.g. 65 mph), the ACC requested speed, and the user requested speed.

In some example embodiments, the advisory speed 316 may also be used by the arbiter 308 to modulate one or more vehicle functions other than speed, including: acceleration, braking, steering, lane position, etc.

Also, in various example embodiments, the ASA module 314 can send the advisory speed 316 directly to the display 310, from which a user message can be generated and displayed to the user (e.g. "WARNING! You're slower than traffic"). Such a warning may be useful when the traffic flow moves faster than the speed limit, and the car maker doesn't want liability associated with advising a higher speed. The ASA module 314 can also display "WARNING! You're faster than traffic" or "You move safely with the traffic flow". Note that instead of textual messages warning messages can be communicated as symbols on the instrument cluster, color codes on LEDs or audio signals.

Figures 4A, 4B represents example simulated operational applications of the advisory vehicle speed assistance.

Figure 4A shows a simulation of the ego vehicle 312 absent any surrounding traffic. In this example, the advisory speed 316 may be primarily based on current and historical data. For example, the historical traffic information received for the travel route may state that most cars drive here at 75 km/h 402, e.g., because of poor road condition. Online current traffic information service warns about a car incident ahead. Driving at the speed limit of 90 km/h 404 raises the risk of collision and loss of control. Advisory speed 316, therefore, is computed to be 75 km/h.

Figure 4B shows a simulation of the ego vehicle 312 (i.e. car in center) with lots of surrounding traffic. The traffic surrounding the ego vehicle 312 to the front, rear, right side, and left side is detected by car sensors. This surrounding traffic drives at 35, 40 and 45 km/h (as shown), perhaps because of poor visibility. Driving at the speed limit of 50 km/h 406 raises the risk of collision. Advisory speed 316, therefore, is computed to be 40 km/h 408.

In an alternate scenario, the legal speed limit may be 50 km/h as shown by a sign on the side of the road. The ego vehicle 312 may be driving at 50 km/h along with one or two cars next to it driving at 40 or 45 km/h, and one car 100 meters behind it driving at 35 km/h. In this scenario, the advisory speed 316 should be around 40 km/h for the ego vehicle 312, instead of the legal speed of 50 km/h.

On other example applications, the advisory speed 316 may be higher than the legal speed limit, perhaps due to all traffic traveling at a higher rate of speed.

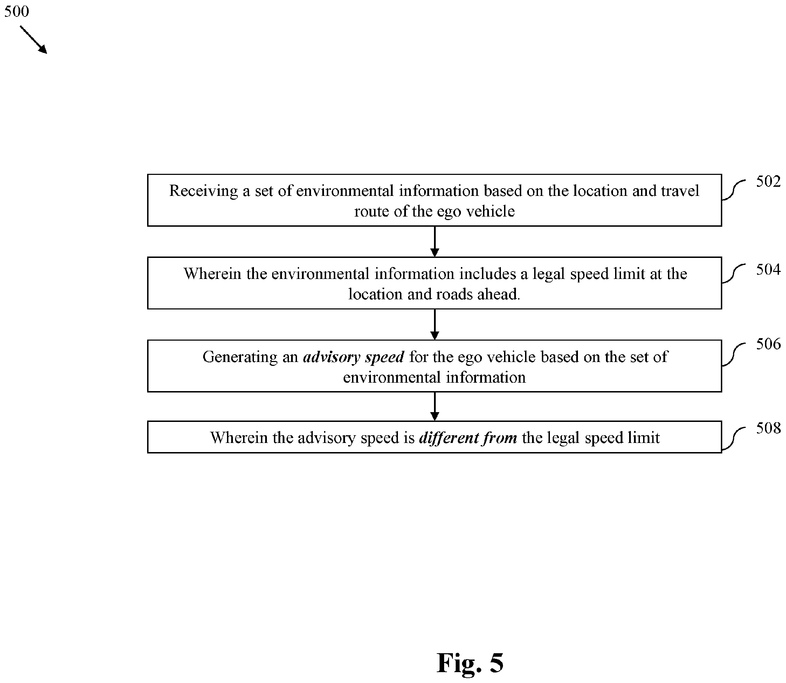

Figure 5 represents an example set of instructions 500 for enabling advisory vehicle speed assistance. The order in which the instructions are discussed does not limit the order in which other example embodiments implement the instructions unless otherwise specifically stated. Additionally, in some embodiments the instructions are implemented concurrently.

A first example instruction set begins in 502, by receiving a set of environmental information based on the location and travel route of the ego vehicle. Next, in 504, the environmental information includes a legal speed limit at the location and roads ahead. Then in 506, generating an advisory speed based on the set of environmental information. In 508, the advisory speed is different from the legal speed limit.

In some example embodiments the set of instructions described above are implemented as functional and software instructions. In other embodiments, the instructions can be implemented either using logic gates, application specific chips, firmware, as well as other hardware forms.

In various example embodiments, the ASA module 314 can host these instructions. The ASA module 314 and/or controllers 306 can in many example embodiments include an input/output data interface, a processor, a storage device, and a non-transitory machine-readable storage medium. The machine-readable storage medium includes the instructions which control how the processor receives input data and transforms the input data into output data, using data within the storage device. The machine-readable storage medium in an alternate example embodiment is a non-transitory computer-readable storage medium.

It will be readily understood that the components of the embodiments as generally described herein and illustrated in the appended figures could be arranged and designed in a wide variety of different configurations. Thus, the detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment.

## Claims

1. A system for advisory vehicle speed assistance, comprising:
a controller coupled to receive a set of environmental information based on a location of an ego vehicle;
wherein the environmental information includes a legal speed limit at the location;
wherein the controller is configured to generate an advisory speed for the ego vehicle based on the set of environmental information; and
wherein the advisory speed is different from the legal speed limit.

2. The system of claim 1:
further comprising a driver-assistance system coupled to the controller;
wherein the driver-assistance system controls movement of a vehicle; and
wherein the movement of the vehicle is based on the advisory speed.

3. The system of claim 1 or 2:
wherein the advisory speed controls the ego vehicle's actual physical speed.

4. The system of claim 2:
wherein the driver-assistance system is an advanced driver assistance system (ADAS).

5. The system of any of claims 1 to 4:
further comprising a display coupled to the controller;
wherein the advisory speed or advisory speed range is presented to a user of the ego vehicle on the display.

6. The system of any of claims 1 to 5:
wherein the environmental information includes a location, heading, and speed of other vehicles surrounding the ego vehicle; and
wherein the advisory speed is dependent upon the location, heading, and speed of the other vehicles surrounding the ego vehicle.

7. The system of claim 6:
wherein the environmental information includes a location, heading, and speed for each other vehicle immediately to a front, rear, right side, and left side of the ego vehicle.

8. The system of any of claim 1 to 7:
wherein the set of environmental information includes historical speeds at a location and roads ahead of the ego vehicle.

9. The system of claim 8:
wherein the ego vehicle is at the location on a current date; and
wherein the historical speeds are based upon a range of prior week, month or year dates centered about the current date.

10. The system of claim 8:
wherein the set of environmental information includes current speeds of other vehicles ahead of the ego vehicle.

11. The system of any of claim 1 to 10:
wherein the set of environmental information includes weather conditions, roadway construction, road hazards, road lighting, and road surface conditions at both a location of the ego vehicle and ahead of the ego vehicle.

12. The system of any of claim 1 to 11:
wherein the environmental information includes,
a location and speed for vehicles surrounding the ego vehicle;
historical speeds at a location and roads ahead of the ego vehicle; and
current speeds of other vehicles ahead of the ego vehicle.

13. The system of claim 12:
wherein the controller is configured grant a highest priority to vehicles surrounding the ego vehicle when generating the advisory speed.

14. The system of claim 12:
wherein the controller is configured assign a pre-defined weight to the surrounding speeds, the historical speeds and the current speeds; and
wherein the controller is configured to generating the advisory speed based on a weighted average of the surrounding speeds, the historical speeds and the current speeds.

15. A method for advisory vehicle speed assistance, comprising:
receiving a set of environmental information based on a location and route of an ego vehicle;
wherein the environmental information includes a legal speed limit at the location and roads ahead;
generating an advisory speed for the ego vehicle based on the set of environmental information;
wherein the advisory speed is different from the legal speed limit.
